## Europäisches Patentamt

## European Patent Office

## Office européen des brevets

(11) Veröffentlichungsnummer: **0 104 486**
**B1**

(12) **EUROPÄISCHE PATENTSCHRIFT**

(45) Veröffentlichungstag der Patentschrift: **25.05.88**

(51) Int. Cl.⁴: **H 04 B 1/74, H 04 B 7/155**

(21) Anmeldenummer: **83108587.3**

(22) Anmeldetag: **31.08.83**

(54) System zur Übertragung von Informationen.

(30) Priorität: **02.09.82 DE 3232691**

(43) Veröffentlichungstag der Anmeldung:
**04.04.84 Patentblatt 84/14**

(45) Bekanntmachung des Hinweises auf die
Patenterteilung:
**25.05.88 Patentblatt 88/21**

(84) Benannte Vertragsstaaten:
**AT CH DE LI NL**

(56) Entgegenhaltungen:
**DE-B-1 250 886**
**DE-C-2 152 721**
**US-A-2 840 696**
**US-A-3 393 365**

(73) Patentinhaber: **Siemens Aktiengesellschaft**
**Berlin und München**
**Wittelsbacherplatz 2**
**D-8000 München 2 (DE)**

(72) Erfinder: **Vogel, Klaus, Dipl.-Ing.**
**Kranzlstrasse 15**
**D-8292 Geretsried/Gelting (DE)**
Erfinder: **Panschar, Hans, Dipl.-Ing.**
**Kerschensteinerstrasse 127**
**D-8034 Unterpfaffenhofen (DE)**

Courier Press, Leamington Spa, England.

EP 0 104 486 B1

**Beschreibung**

Die Erfindung bezieht sich auf ein System zur Übertragung von Informationen auf elektrischem Wege mit hoher Sicherheit, insbesondere Richtfunksystem, bei dem mehrere Übertragungskanäle vorgesehen sind, sowie Überwachungs- und Umschalteinrichtungen, die bei Störungen in einem Übertragungskanal eine Ersatzschaltung veranlassen. Ein solches System ist beispielsweise durch die DE—C—2 152 721 bekannt.

Bei solchen Übertragungssystemen ist vorgesehen, daß einer bestimmten Anzahl von Übertragungskanälen jeweils ein oder mehrere Ersatzkanäle zum Austausch zugeordnet sind. Solche Ersatzkanäle erfordern eine zusätzliche Bandbreite, was wegen der zunehmenden Bandknappheit in Richtfunkbändern nicht erwünscht ist. Statt dessen soll der Heißersatz von Funkfeldern nunmehr mit einem elektronisch durchstimmbaren Heißersatzgerät erfolgen.

Der Erfindung liegt die Aufgabe zugrunde, für ein solches Übertragungssystem eine Lösung anzugeben, die den Ersatzschaltvorgang besonders zuverlässig und mit geringem Aufwand an Mikrowellenverbindungsleitungen und Schaltern ermöglicht. Ferner soll dabei auch eine unterbrechungsfreie von-Hand-Umschaltung möglich sein.

Diese Aufgabe wird gemäß der Erfindung gelöst durch einen im Betriebszustand befindlichen, mit einer Steuereinrichtung verbundenen Ersatzender (Heißersatz), der über von der Steuereinrichtung angesteuerte Schaltelemente im Basisband wahlweise an die einzelnen Übertragungskanäle anschaltbar ist und im Störungsfall nach erfolgter Einstellung auf die Frequenz des Senders des gestörten Übertragungskanals am Senderausgang an das Kanalweichenfilter des betreffenden Übertragungskanals angeschaltet und der gestörte Sender von diesem Kanalweichenfilter abgetrennt wird und ferner durch einen entsprechend gesteurten Ersatzempfänger (Heißersatz) auf der Empfangsseite mit analoger Schalteranordnung nach den Kanalweichenfiltern.

Vorteilhafte Ausgestaltungen und Weiterbildungen des Anmeldungsgegenstandes sind in den Unteransprüchen angegeben.

Nachstehend wird die Erfindung anhand von in der Zeichnung dargestellten Ausführungsbeispielen näher erläutert.

Es zeigen

Fig. 1 das Übertragungssystem mit Sendeeinrichtungen und Empfangseinrichtungen im Blockschaltbild,

Fig. 2 und 3 Teildarstellungen der Sendeseite mit den Schalteinrichtungen und

Fig. 4 in einer Teildarstellung die sendeseitigen Einrichtungen für eine von-Hand-Umschaltung.

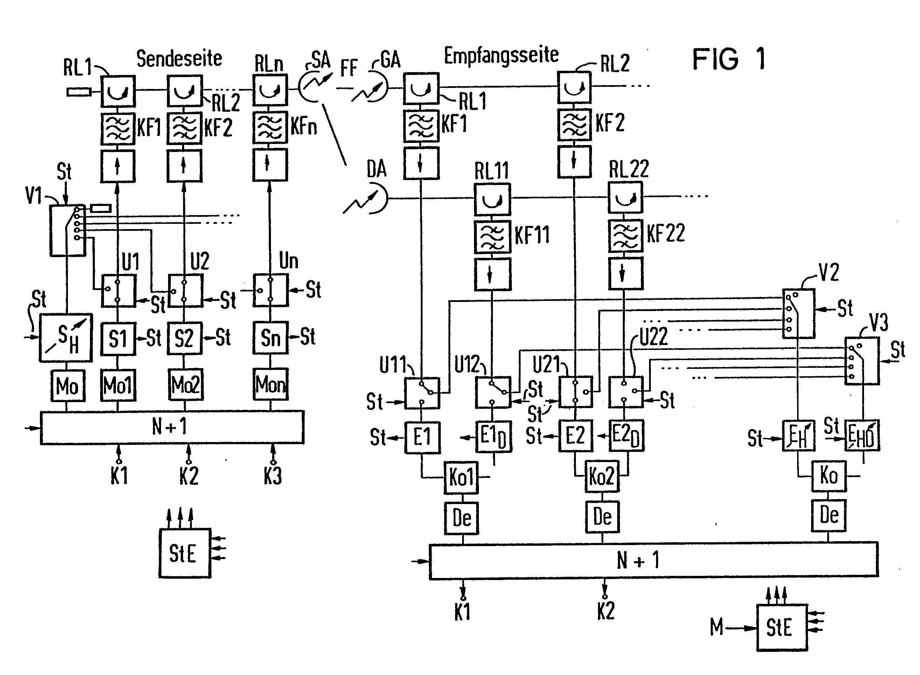

Fig. 1 zeigt den N+1-Heißersatz mit durchstimmbaren Sendern und Empfängern im Blockschaltbild. Dabei sind auf der Sendeseite die einzelnen, mit der N+1-Ersatzschalteinrichtung verbundenen Übertragungskanäle an die einzelnen Richtungsleitungen RL1, RL2 ... der an die Sendeantenne SA angeschlossenen Sendekanalweiche angeschaltet. Die einzelnen Übertragungskanäle enthalten jeweils einen Modulator Mo1, Mo2..., einen Sender S1, S2..., einen Umschalter U1, U2... und ein Kanalweichenfilter KF1, KF2..., das im Beispiel mit der jeweiligen Richtungsleitung RL1, RL2... verbunden ist. Ferner ist ein einen Heißersatzsender S$_H$ anhaltender Zweig vorgesehen, dem ein mit der N+1-Ersatzschalteinrichtung verbundener Modulator Mo vorgeschaltet ist und der mit der Mittenanzapfung eines Verteilerschalters V1 verbunden ist. Die einzelnen Anschlüsse des Verteilerschalters V1 sind an die in den Übertragungskanälen liegenden Umschalter U1, U2... angeschlossen. Die Umschalter U1, U2..., der Verteilerschalter V1 sowie der Heißersatzsender S$_H$ werden von den Steuersignalen St einer Steuereinrichtung StE angesteuert. Die Steuerung erfolgt mit von den einzelnen Sendern S1, S2... abgegebenen Steuersignalen St, die den Bedarf eines Ersatzsenders anzeigen. Bei Ausfall des Senders eines Übertragungskanals wird dann über die Steuerungseinheit StE dieser Übertragungskanal abgeschaltet und der Heißersatzsender nach Abstimmung auf die entsprechende Frequenz auf den betreffenden Übertragungskanal aufgeschaltet. Sende- und Empfangsseite sind über ein Funkfeld FF miteinander verbunden. Beim dargestellten Übertragungssystem für den Raum-Diversity-Betrieb sind empfangssystem eine Antenne GA für das Grundsignal und eine zweite Antenne DA für das Diversity-Signal vorgesehen. Entsprechend ist jeder Übertragungskanal der Empfangsseite mit den Einrichtungen für das Grundsignal und das Diversity-Signal ausgestattet. Die Empfangszweige, denen die Empfangssignale über Richtungsleitungen RL1, RL2... bzw. RL11, RL22... zugeführt werden, enthalten, jeweils ein Kanalweichenfilter KF1, KF2... bzw. KF11, KF22..., einen Umschalter U11, U21... bzw. U12, U22..., einen Empfänger E1, E2... für das Grundsignal bzw. einen Diversity-Empfänger E1$_D$, E2$_D$..., einen Kombinator Ko1, Ko2..., über die die Empfänger für das Grundsignal und das Diversity-Signal jeweils ausgangsseitig miteinander verbunden sind und einen den Kombinatoren nachgeschalteten Demodulator De, die an die N+1-Ersatzschalteinrichtung angeschlossen sind. Der Zweig für den Heißersatzempfänger besteht aus einem Empfänger E$_H$ für das Grundsignal und einem Empfänger E$_{HD}$ für das Diversity-Signal, die ausgangsseitig über einen Kombinator Ko miteinander verbunden sind, dem ein Demodulator De nachgeschaltet ist, und denen jeweils ein Verteilerschalter V2 bzw. V3 vorgeschaltet ist, deren einzelne Anschlüsse an die in den Übertragungskanälen liegenden Umschalter U11, U21... bzw. U12, U22... geführt sind. Eine Steuereinheit StE steuert empfangsseitig das Heißersatzsystem auf die richtige RF-Frequenz sowie ferner die einzelnen Umschalter in den Übertragungskanälen. Das Eingangssignal M der Steuereinheit StE beinhaltet z.B. die Meldung über einen Senderausfall von der Sendeseite. Empfangsseitig erfolgt die Heißersatzschaltung etwas verzögert, bis eine entsprechende Meldung von der Sendeseite vorliegt.

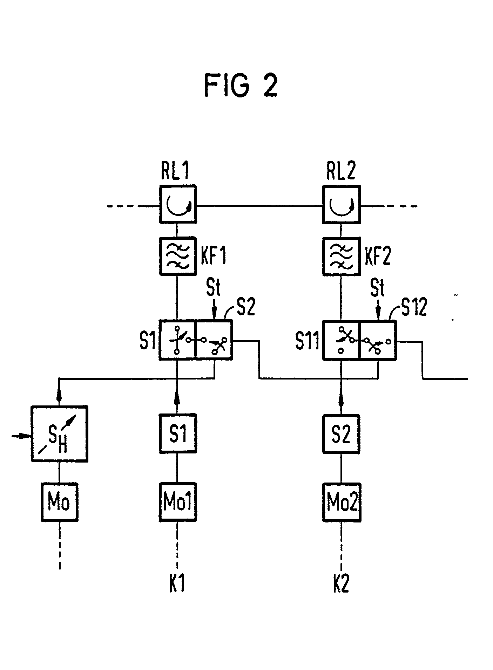

Fig. 2 zeigt in einer Teildarstellung die Schalteinrichtungen der Sendeseite, die in analoger Ausbildung auf der Empfangsseite vorhanden sind. Es sind dabei für jeden Übertragungskanal jeweils zwei mechanische Schalter S1, S2; S11, S12... vorgesehen, von denen der eine S1, S11 im Leitungsweg der Übertragungskanäle angeordnet ist und der andere S2, S12 diesem jeweils zugeordnet und mit seinem Mittenkontakt mit dem Ausgang des Heißersatzsenders $S_H$ verbunden ist. Diese Schalter werden von der Steuereinrichtung StE (vgl. Fig. 1) angesteuert. In Fig. 2 ist der Fall dargestellt, daß der Übertragungskanal K2 ersatzgeschaltet ist. Das Signal des Heißersatzsenders $S_H$ gelangt dabei über den Schalter S2 in der für den Übertragungskanal K1 geöffneten Stellung zum Schalter S12 des zweiten Übertragungskanals, der sich in der für den Ersatzbetrieb vorgesehenen Stellung befindet, und über den Schalter S11, der den Durchgangsweg dieses Übertragungskanals unterbricht, zum Kanalweichenfilter KF2 dieses Übertragungskanals.

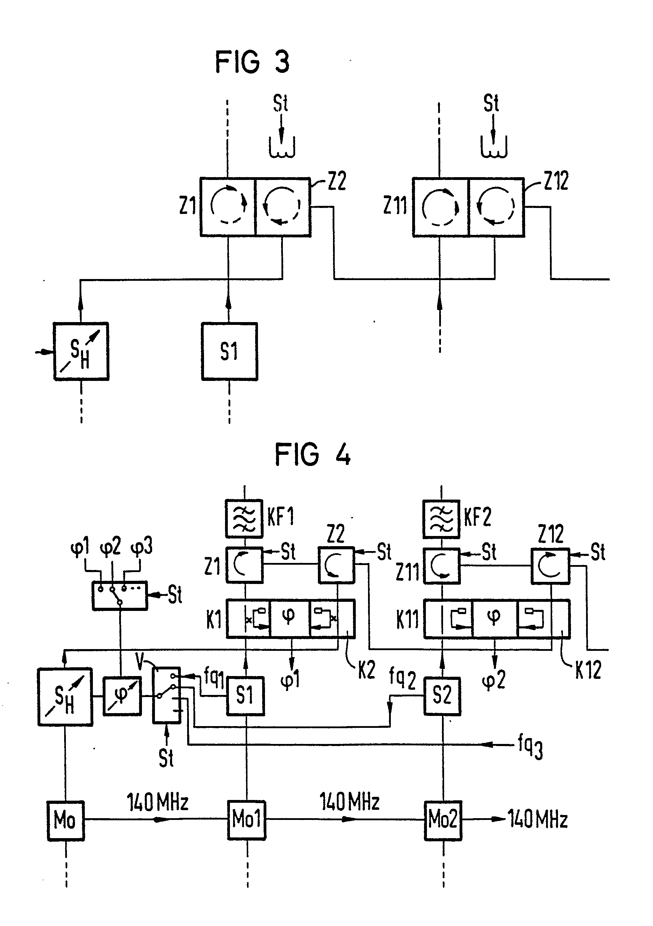

Fig. 3 zeigt in einer Teildarstellung am Beispiel der Sendeseite eine weitere Ausführungsform der Schalteinrichtungen, die in gleicher Weise auch für die Empfangsseite verwendet werden. Gegenüber dem Ausführungsbeispiel nach Fig. 2 sind hierbei die mechanischen Schalter durch verlustarme elektronische Schalter ersetzt. Sie bestehen aus Zirkulatoren, die jeweils paarweise einem Übertragungskanal zugeordnet sind. Einer der Zirkulatoren Z1, Z11 ist dabei im Leitungsweg der Übertragungskanäle eingeschaltet, der diesem zugeordnete zweite Zirkulator Z2, Z12 ist jeweils an den Heißersatzsender $S_H$ angeschlossen. Durch Umpolung des Magnetfeldes wird die Drehrichtung der Zirkulatoren umgekehrt. Diese Umpolung wird gesteuert durch die Steuersignale St der Steuereinheit StE (vgl. Fig. 1) und bewirkt, daß im Störungsfall der gestörte Sender abgeschaltet und der Heißersatzsender, nach vorheriger Einstellung auf die entsprechende Frequenz, auf den gestörten Übertragungskanal aufgeschaltet wird.

Der Vorteil dieser Schalter besteht darin, daß sie gegenüber mechanischen Schaltern kontaktfrei, besonders verlustarm und zuverlässig sind und eine weiche Umschaltung möglich ist. Gegenüber PIN-Schaltern beispielsweise besitzen sie sehr kleine Durchgangsverluste. Ferner ist bei ihnen in vorteilhafter Weise auch die Möglichkeit einer unterbrechungsfreien von-Hand-Umschaltung gegeben.

Eine Ausführungsform für eine von-Hand-Umschaltung für die Sendeseite ist in Fig. 4 in einer Teildarstellung gezeigt. Bei dieser Umschaltaung erfolgt vor der Mikrowellenumschaltung eine RF-Phasensynchronisation zwischen Ersatzender und zu ersetzendem Sender sowie eine unterbrechungsfreie, gleitende Umschaltung der Mikrowellenschalter. Die Empfangsseite bedarf nur der gleitend übergehenden Mikrowellenschalter und, wie die Sendeseite, des unterbrechungsfreien Bb-Umschalters. Die sendeseitige phasenstarre Umschaltung wird auf einfache Weise dadurch erreicht, daß die Quarzsignale $f_{q1}$, $f_{q2}$... der RF-Trägerversorgungen aller ersatzzuschaltenden Sender S1, S2... zum Heißersatzsender $S_H$ geführt werden. Vor dem Mikrowellenumschaltvorgang wird die Heißersatzträgerversorgung auf die entsprechende, durch den Schalter V ausgewählte Quarzfrequenz phasensynchronisiert. Zudem werden alle Modulatoren einschließlich des Heißersatzmodulators von einem Zwischenfrequenz-Trägeroszillator gespeist.

Die Phasenfeinsynchronisation der zu synchronisierenden Sender erfolgt, falls sie notwendig ist, mit einem Mikrowellenphasendetektor φ am Mikrowellenschalter bestehend aus den Zirkulatoren Z1, Z2; Z11, Z12..., denen jeweils Koppler K1 bzw. K2, K11 bzw. K12... vorgeschaltet sind, deren ausgekoppeltes Signal dem Phasendetektor φ zugeführt wird. Der Mikrowellenschalter steuert über die Ausgangssignale (Steuersignale) φ1, φ2 der Phasendetektoren φ einen zwischen dem Verteilerschalter V und dem Heißersatzsender $S_H$ eingeschalteten Phasenschieber der Heißersatzträgerversorgung. Wegen des Quarzfrequenzvervielfachungsfaktors in der Heißersatzträgerversorgung muß die Quarzphase nur um wenige Grad gedreht werden, um beide Sender in der RF-Lage phasenstarr zu synchronisieren. Nach vollzogener Synchronisation erfolgt die stoßfreie RF-Senderumschaltung mit den Schaltern Z1, Z2; Z11, Z12... Die begrenzte Entkopplung der Schaltung sorgt dafür, daß während des Umschaltvorganges die Sendeamplitude nie mehr als z.B. 20 dB absinkt, was auf der Empfangsseite durch die Schwundregelung ausgeregelt wird. Die Umschaltungsgeschwindigkeit wird über die Magnetfelderzeugung der Zirkulatoren gesteuert.

**Patentansprüche**

1. System zur Übertragung von Informationen auf elektrischem Wege mit hoher Sicherheit, insbesondere Richtfunksystem, bei dem mehrere Übertragungskanäle (K) vorgesehen sind, sowie Überwachungs- und Umschalteinrichtungen, die bei Störungen in einem Übertragungskanal eine Ersatzschaltung veranlassen, gekennzeichnet, durch einen im Betriebszustand befindlichen, mit einer Steuereinrichtung (StE), verbundenen Ersatzsender (Heißersatz) (3H), der über von der Steuereinrichtung angesteuerte Schaltelemente (V,U) im Basisband wahlweise an die einzelnen Übertragungskanäle anschaltbar ist und im Störungsfall nach erfolgter Einstellung auf die Frequenz des Senders (5) des gestörten Übertragungskanals am Senderausgang an das Kanalweichenfilter (K,F) des betreffenden Übertragungskanals angeschaltet und der gestörte Sender von diesem Kanalweichenfilter abgetrennt wird und ferner durch einen entsprechend gesteuerten Ersatzempfänger (Heißersatz) (EH) auf der Empfangsseite mit analoger Schalteranordnung (U,V) nach den Kanalweichenfiltern (K,F).

2. System nach Anspruch 1, dadurch gekennzeichnet, daß die Schaltelemente (V,U Fig. 1) aus einem Verteilerschalter (V) im Ausgangszweig des Ersatzsenders, (GH) und des Ersatzempfängers (EH) und einem Schalter (U) im jeweiligen Leitungsweg der Übertragungskanäle (K) bestehen, die alle von der Steuereinrichtung (StE) angesteuert werden.

3. System nach Anspruch 1, dadurch gekennzeichnet, daß die Schaltelemente (S1, S2, S11, S12, Fig. 2) aus jeweils einem im Leitungsweg der Übertragungskanäle angeordneten mechanischen Schalter (S1, S11) und jeweils einem diesem zugeordneten, mit dem Ersatzsender (Sh) verbundenen, angesteuerten mechanischen Umschalter (S1, S12) bestehen.

4. System nach Anspruch 1, dadurch gekennzeichnet, daß die Schaltelement (Z, Fig. 3) aus drehrichtungsgeschalteten Zirkulatoren (Z) bestehen, die jedem Übertragungskanal paarweise zugeordnet sind und von denen der eine jeweils im Leitungsweg des Übertragungskanals liegt und der andere mit gegensinniger Übertragungsrichtung mit dem Ausgang des Ersatzsenders bzw. -empfängers verbunden ist und daß im Störungsfall durch Umpolung von deren Magnetfeldrichtung die Übertragungsrichtung beider Zirkulatoren umgekehrt wird.

5. System nach Anspruch 4, dadurch gekennzeichnet, daß zur manuellen Umschaltung des Ersatzsenders bzw. -empfängers (SH, EH, Fig. 4) auf einen gestörten Übertragungskanal vor der Umschaltung eine RF-Phasensynchronisation zwischen Ersatzender bzw. -empfänger und zu ersetzendem Sender bzw. Empfänger in der Weise erfolgt, daß die Quarzsignale (F9) der RF-Trägerversorgungen aller ersatzschaltenden Sender bzw. Empfänger über einen Verteilerschalter (V) zum Heißersatzsender bzw. -empfänger geführt werden und vor dem Umschaltvorgang die Heißersatzträgerversorgung auf die entsprechende, durch den Schalter ausgewählte Quarz-frequenz phasensynchronisiert wird und alle gleich-frequenten Trägeroszillatoren im Heißersatzmodulator und allen anderen Modulatoren auf einen Oszillator entsprechender Frequenz phasensynchronisiert werden.

**Revendications**

1. Système pour la transmission d'informations par voie électrique, avec grande sécurité, en particulier système de transmission par faisceaux hertziens, dans lequel sont prévus plusieurs canaux de transmission (K), ainsi que des installations de surveillance et de commutation qui, dans le cas de perturbations dans le canal de transmission, provoquent la réalisation d'un circuit de remplacement, caractérisé par un émetteur de remplacement (émetteur de remplacement chaud) (34) qui se trouve à l'état de fonctionnement, qui est relié à un dispositif de commande (StE) et qui est susceptible d'être relié, par l'intermédiaire d'éléments de commutation (V, U) commandés par le dispositif de commande, dans la bande de base, au choix aux différents canaux de transmission, et qui branche, dans le cas d'une perturbation et après réglage sur la fréquence de l'émetteur (S) du canal de transmission perturbé, à la sortie de l'émetteur, au filtre d'aiguillage des canaux (KF) du canal de transmission considéré, l'émetteur perturbé étant séparé de ce filtre d'aiguillage des canaux, ainsi que par un récepteur de remplacement (récepteur de remplacement chaud), ($E_H$) commandé de façon correspondante, sur le côté réception, avec un dispositif de commutation analogue (U, V), après les filtres d'aiguillage des canaux (KF).

2. Système selon la revendication 1, caractérisé par le fait que les éléments de commutation (V, U, Fig. 1) sont constitués par un commutateur-répartiteur (V) situé dans la branche de sortie de l'émetteur de remplacement ($S_H$) et de récepteur de remplacement ($E_H$) et par un commutateur (U) situé dans la voie de conduction concerné des canaux de transmission (K), qui sont tous attaqués par le dispositif de commande (StE).

3. Système selon la revendication 1, caractérisé par le fait que les éléments de commutation ($S_1$, $S_2$, $S_{11}$, $S_{12}$, Fig. 2) sont chacun constitués par un commutateur mécanique ($S_1$, $S_{11}$) disposé dans la voie de conduction des canaux de transmission et par un commutateur-inverseur mécanique et commandé ($S_2$, $S_{12}$) associé au précédent et relié à l'émetteur de remplacement ($S_H$).

4. Système selon la revendication 1, caractérisé par le fait que les éléments de commutation (Z, Fig. 3) sont constitués par des circulateurs (Z) branchés en sens de rotation, lesdits circulateurs étant associés par paires à chaque canal de transmission et parmi lesquels l'un est dans la voie de conduction du canal de transmission alors que l'autre est relié, avec un sens de transmission opposé, à la sortie de l'émetteur de remplacement ou du récepteur de remplacement, et par le fait que dans le cas d'une perturbation, et par inversion de la polarité des sens de leurs champs magnétiques, le sens de transmission des deux circulateurs est inversé.

5. Système selon la revendication 4, caractérisé par le fait que pour la commutation manuelle de l'émetteur ou du récepteur de remplacement ($S_H$, $E_H$, Fig. 4) sur un canal de transmission perturbé, et avant la commutation, il est procédé à une synchronisation de phase de la radiofréquence entre l'émetteur ou le récepteur de remplacement et l'émetteur ou le récepteur à remplacer, et cela de telle façon que les signaux des quartz ($F_q$) des alimentations des porteuses de radiofréquence de tous les émetteurs ou récepteurs de commutation de remplacement sont reliées, par l'intermédiaire d'un commutateur-répartiteur (V), à l'émetteur ou au récepteur de remplacement chaud, alors qu'avant le processus de commutation, l'alimentation porteuse des dispositifs de remplacement chaud est synchronisée en phase avec la fréquence correspondante du cristal, sélectionnée par le commutateur et que tous les oscillateurs des porteuses de même fréquencde, dans le modulateur de remplacement chaud et dans tous les autres modulateurs, sont synchronisés en phase à une fréquence correspondant à un oscillateur.

## Claims

1. A system for the transmission of information by electrical means with a high level of security, in particular a radio relay system, in which a plurality of transmission channels (K) are provided, as are monitoring- and switch-over devices which, in the event of disturbances in the transmission channel, initiate a stand-by operation, characterised by a stand-by transmitter (hot stand-by) (S_H) in the operating state which is connected to a control device (StE) and which can be selectively connected to the individual transmission channels via switching elements (U,V), driven by the control device in the base band, and in the event of a disturbance after resulting setting at the frequency of the transmitter (S) of the disturbed transmission channel at the transmitter output, is connected to the channel branching filter (KF) of the respective transmission channel and the disturbed transmitter is cut off from this channel branching filter, and further characterised by a correspondingly controlled stand-by receiver (hot stand-by) (E_H) at the receiving end with an analogous switching arrangement (U,V) following the channel branching filters (KF).

2. A system as claimed in claim 1, characterised in that the switching elements (V,U, Fig. 1) comprise a distributor switch (V) in the output arm of the stand-by transmitter (S_H) and the stand-by receiver (E_H) and of a switch (U) in the respective path of the transmission channels (K), all of which are driven by the control device (StE).

3. A system as claimed in claim 1, characterised in that the switching elements (S_1, S_2, S_{11}, S_{12}, Fig. 2) each comprise a mechanical switch (S_1, S_{11}) arranged in the path of the transmission channels, and an assigned, driven mechanical change-over switch (S_2, S_{12}) which is connected to the stand-by transmitter (S_H).

4. A system as claimed in claim 1, characterised in that the switching elements (Z, Fig. 3) comprise circulators (Z) which can be switched over in respect of their direction of rotation and which are assigned in pairs to each transmission channel, and of which one is located in the path of the transmission channel and the other, with an opposite transmission direction, is connected to the output of the stand-by transmitter and receiver, and that in the event of a disturbance the transmission direction of the two circulators is reversed by reversing the polarity of the direction of the magnetic field.

5. A system as claimed in claim 4, characterised in that for the manual switch-over of the stand-by transmitter and receiver (S_H, E_H, Fig. 4) to a disturbed transmission channel, prior to the switch-over, an RF-phase synchronisation takes place between the stand-by transmitter and receiver and the transmitter and receiver respectively which are to be replaced, in such manner that the quartz signals (F_q) of the RF-carrier supplies of all the transmitters and receivers which are to be substituted are fed via a distributor switch (V) to the hot stand-by transmitter and receiver respectively and prior to the switch-over operation the hot stand-by carrier supply is phase-synchronised to the appropriate quartz frequency selected by the switch, and all the like-frequency carrier oscillators in the hot stand-by modulator and all the other modulators are phase-synchronised to an oscillator of the appropriate frequency.

**FIG 1**

# FIG 2

0 104 486

# FIG 3

# FIG 4

3